# EUROPÄISCHE PATENTSCHRIFT

(11) **EP 3 011 201 B1**
(45) Veröffentlichungstag und Bekanntmachung des Hinweises auf die Patenterteilung: **17.02.2021**
(21) Anmeldenummer: 14733525.1
(22) Anmeldetag: 18.06.2014
(51) Int. Cl.: F16H 25/18

(54) **KURVENGETRIEBE**
CAM MECHANISM
COMMANDE À CAMES

(30) Priorität: 21.06.2013 DE 102013010401
(43) Veröffentlichungstag der Anmeldung: 27.04.2016
(73) Patentinhaber: Ernst, Gösta, 53474 Ahrweiler (DE)
(72) Erfinder: Ernst, Gösta, 53474 Ahrweiler (DE)
(74) Vertreter: Freischem, Stephan
(86) Internationale Anmeldenummer: PCT/EP2014/001668
(87) Internationale Veröffentlichungsnummer: WO 2014/202220

(56) Entgegenhaltungen:
- WO-A1-2012/057410
- JP-A- H07 224 918
- US-A- 2 307 886
- "Linear to rotary : revoloop linear drive Patent for Sale", , 7. April 2014 (2014-04-07), XP054975607, Gefunden im Internet: URL:https://www.youtube.com/watch?v=eSiyqn qXhvU [gefunden am 2014-11-17]

## Beschreibung

Die Erfindung betrifft ein Kurvengetriebe zur Übertragung der Drehbewegung einer Welle in eine Linearbewegung eines geführten Abtriebselementes, wobei das Kurvengetriebe einen mindestens eine Führungsnut enthaltenden Kurvenkörper und ein Eingriffsglied mit mindestens einem in die Führungsnut eingreifenden Stößel umfasst.

Die Übertragung von Drehbewegungen einer Welle in eine Linearbewegung eines Abtriebselementes, z.B. eines Schiebers, erfolgt bei Verwendung bekannter Kurvengetriebe üblicherweise derart, dass das Kurvenglied mit dem Antriebselement (Welle) und das Eingriffsglied mit dem Abtriebselement verbunden sind. Dabei wird häufig bei Drehung der Welle um 360° eine Vor- und Rückwärtsbewegung des Abtriebselementes (beispielsweise des Kolbens eines Verbrennungsmotors) bewirkt (vgl. beispielsweise: Johannes Volmer: "Getriebetechnik", VEB Verlag Technik, Berlin, 4. durchgesehene Auflage, S. 346ff.).

Die JP-H07 224918 A offenbart, nach Auffassung der Prüfungsabteilung des europäischen Patentamts, ein Kurvengetriebe zur Übertragung der Drehbewegung einer Welle in eine Linearbewegung eines geführten Abtriebselementes, wobei das Kurvengetriebe einen mindestens eine Führungsnut enthaltenden Kurvenkörper und ein Eingriffsglied mit mindestens einem in die Führungsnut eingreifenden Stößel umfasst, mit den Merkmalen: a) das Eingriffsglied ist mit der Welle verbunden, derart, dass sich bei Drehung der Welle der Stößel als Antriebsstößel in einem vorgegebenen Abstand kreisförmig um die Drehachse der Welle bewegt; b) das geführte Abtriebselement ist entweder als Schieber ausgebildet und der Kurvenkörper ist Teil des Schiebers.

Die JP-H07 224918 A offenbart jedoch keine Führungsnut mit schlaufenförmigem Verlauf.

Der Erfindung liegt die Aufgabe zugrunde, ein gegenüber bekannten Kurvengetrieben alternatives Kurvengetriebe anzugeben, mit dem sowohl eine axial beschränkte Linearbewegung ausgeführt werden kann, mit dem aber auch durch einfache ergänzende Maßnahmen eine Linearbewegung des Abtriebselementes entlang eines beliebig langen vorgebbaren Weges möglich ist.

Diese Aufgabe wird erfindungsgemäß durch die Merkmale des Anspruchs 1 gelöst. Weitere, besonders vorteilhafte Ausgestaltungen der Erfindung offenbaren die Unteransprüche. Die Erfindung beruht im Wesentlichen auf dem Gedanken, dass die Führungsnut des Kurvenkörpers einen schlaufenförmigen Verlauf aufweist

Der genaue Verlauf der Führungsnuten kann entweder aufgrund der vorgegebenen Bewegung des Abtriebsgliedes empirisch ermittelt werden (beispielsweise Vorgabe der axialen Verschiebung des Kurvenkörpers pro Grad Drehung des Antriebsstößels und Eintragung der sich ergebenden Führungskurve in ein Bewegungsschaubild sowie Interpolation der Zwischenwerte) oder die Führungsnuten werden rechnerisch ermittelt. Die empirisch oder rechnerisch ermittelten Daten für die Führungsnuten können dann mittels einer rechnergesteuerten Fräse automatisch in den Führungskörper eingefräst werden.

Durch Verwendung eines Eingriffsgliedes mit mehreren kreisförmig um die Welle herum angeordneten Antriebsstößeln, die in eine entsprechende Anzahl von Führungsnuten des Kurvenkörpers eingreifen, kann sowohl eine gleichmäßige Verschiebung des Abtriebselementes als auch eine gleichmäßige Verteilung der auf das Abtriebselement wirkenden Kräfte sowie eine Selbsthemmung des Kurvengetriebes erreicht werden.

Um eine Verschiebung des Abtriebselementes über eine beliebige Länge zu erreichen, muss der Kurvenkörper eine dem Verschiebeweg entsprechende Länge besitzen und entlang des Kurvenkörpers geeignete Führungsnuten aufweisen. Dabei müssen zwischen den einzelnen, die Schubbewegung bewirkenden Führungsnutabschnitten Verbindungsbereiche vorgesehen werden, innerhalb welcher der jeweilige Antriebsstößel die durch einen nachfolgenden Antriebsstößel bewirkte Schubbewegung des Abtriebselementes nicht behindert. Dieses wird dadurch erreicht, dass der jeweilige Antriebsstößel aus der ihm zugeordneten Führungsnut austritt, sobald er das Ende der die Schubbewegung bewirkenden Kurvenkontur der Führungsnut erreicht hat und erst wieder in die ihm zugeordnete Führungsnut eintritt, wenn diese Führungsnut eine Kurvenkontur besitzt, die eine weitere Schubbewegung ermöglicht.

Vorzugsweise handelt es sich bei den Verbindungsbereichen zwischen den Führungsnutabschnitten um einen, sich an die Kurvenkörper über Ein- und Auslaufbereiche der Führungsnuten anschließenden, axial verlaufenden, vertieften Randbereich des Kurvenkörpers. Dabei muss die Tiefe dieses Randbereiches größer als die Länge der Antriebsstößel sein.

Bei einem Ausführungsbeispiel der Erfindung ist das Eingriffselement scheibenförmig ausgebildet und weist auf einem die Achse der Welle als Mittelachse einschließenden Kreis eine Vielzahl gleichmäßig beabstandeter Bohrungen auf, in welche die Antriebsstößel einsetzbar sind.

Bei einem weiteren Ausführungsbeispiel der Erfindung ist vorgesehen, die Welle mit zwei voneinander beabstandeten, axial parallel zueinander angeordneten Eingriffsglieder zu verbinden. Dabei greifen die Antriebsstößel der beiden Eingriffsglieder jeweils in die Führungsnuten zweier getrennter Kurvenkörper ein, welche jeweils mit einem als Schieber ausgebildeten Abtriebselement verbunden sind, wobei die Kurvenkonturen der Führungsnuten der beiden Kurvenkörper derart gewählt sind, dass bei Drehung der Welle eine gegenläufige Verschiebung der Abtriebselemente erfolgt.

Der Kurvenkörper und/oder das Eingriffsglied können aus Metall (beispielsweise Aluminium), aus Kunststoff oder einem anderen, eine ausreichende Festigkeit aufweisenden Material (beispielsweise einem Faserverbundwerkstoff) bestehen.

Weitere Einzelheiten und Vorteile der Erfindung ergeben sich aus den folgenden, anhand von Figuren erläuterten Ausführungsbeispielen. Es zeigen:
Fig. 1-4 Draufsichten auf ein schematisch dargestelltes erfindungsgemäßes Kurvengetriebe nach dem Stand der Technik, bei dem das Eingriffsglied lediglich zwei umfangsseitig um 180° versetzt angeordnete Antriebsstößel umfasst, die in vertikale Führungsnuten eines als Schieber ausgebildeten Kurvenkörpers eingreifen;
Fig.5 eine Draufsicht auf einen Abschnitt einer zwei Schlaufen aufweisenden Führungsnut, in die ein Antriebsstößel eines Eingriffsgliedes eingreift;
Fig.6 eine Draufsicht auf ein konkretes Ausführungsbeispiel eines Kurvengetriebes, bei dem sieben Antriebsstößel in entsprechende Führungsnuten eines als Schieber ausgebildeten Kurvenkörpers eingreifen;
Fig.7 einen Querschnitt des in Fig.6 dargestellten Kurvengetriebes entlang der in Fig.6 mit VII-VII bezeichneten Schnittlinie.

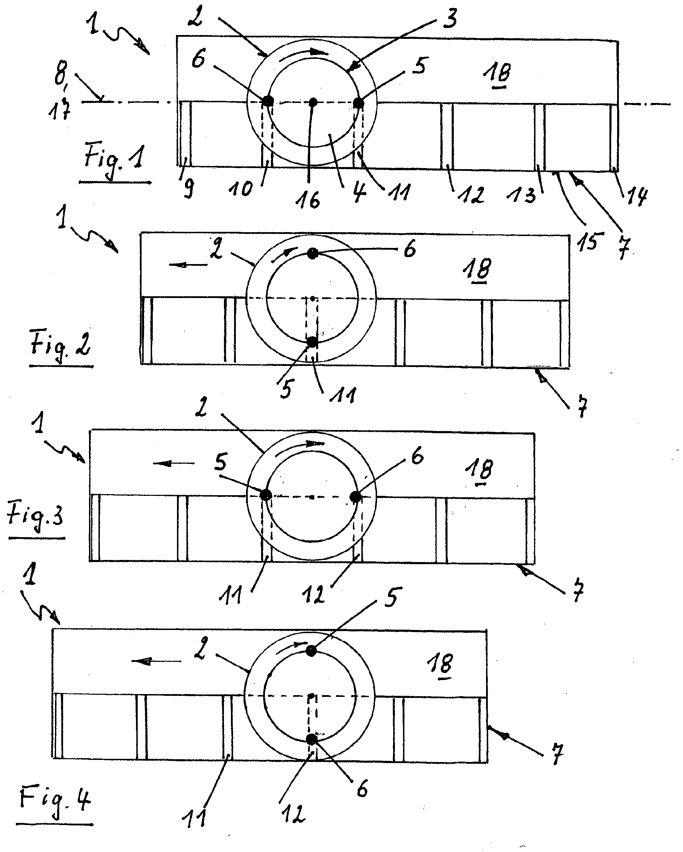

In den Fig.1-4 ist die Draufsicht auf mit 1 bezeichnetes, nur schematisch dargestelltes, erfindungsgemäßes Kurvengetriebe nach dem Stand der Technik wiedergegeben. Das Kurvengetriebe 1 umfasst eine Welle 2, an der ein Eingriffsglied 3 befestigt ist. Dieses besteht aus einem scheibenförmigen Trägerteil 4 und zwei umfangsseitig um 180° versetzt an dem Trägerteil 4 angeordneten Antriebsstößeln 5, 6. Dabei sind die Antriebsstößel 5, 6 auf der dem Betrachter abgewandten Seite des Trägerteiles 4 befestigt.

Unterhalb des scheibenförmigen Trägerteiles 4 befindet sich ein in einer Führung (nicht dargestellt) axial verschiebbarer Schieber 7 (Abtriebselement). Dieser bildet einen Kurvenkörper mit einer Reihe von in Richtung seiner Längsachse 8 verlaufenden vertikalen Führungsnuten 9-14. Dabei weisen die Führungsnuten 9-14 einen Abstand voneinander auf, der dem Abstand der beiden Antriebsstößel 5, 6 des Eingriffsgliedes 3 entspricht. Außerdem erstrecken sich die Führungsnuten 9-14 in dem dargestellten Ausführungsbeispiel von dem unteren Rand 15 des Kurvenkörpers 7 bis zu einer durch die Lage der Drehachse 16 der Welle 2 vorgegebenen Mittellinie 17. Oberhalb dieser Mittellinie 17 weist der Kurvenkörper 7 einen als Verbindungsbereich 18 zwischen den Führungsnuten 9-14 dienenden vertieften Randbereich auf, dessen Tiefe größer ist als die Länge der Antriebsstößel 5, 6.

Wird nun, ausgehend von Fig.1, die Welle 2 im Uhrzeigersinn gedreht, so gelangt der Antriebsstößel 5 über einen etwas erweiterten Ein- und Auslaufbereich (nicht dargestellt) in die Führungsnut 11 und der Antriebsstößel 6 in den vertieften Randbereich 18.

Der Antriebsstößel 5 drückt bei weiterer Drehung der Welle 2 gegen die linke Innenwand der Führungsnut 11 und verschiebt dadurch den Kurvenkörper 7 in dem dargestellten Ausführungsbeispiel nach links (Fig.2). Da sich der Antriebsstößel 6 in dem vertieften Randbereich 18 befindet, kann er die Bewegung des Kurvenkörpers 7 nicht behindern.

Sobald der Antriebsstößel 5 die Führungsnut 11 verlässt (Fig.3) und in den vertieften Randbereich 18 gelangt, greift der Antriebsstößel 6 in die Führungsnut 12 ein und verschiebt anschließend den Kurvenkörper 7 weiter nach links (Fig. 4).

Den Fig.1-4 ist zu entnehmen, dass bei Drehung der Welle 2 entgegen dem Uhrzeigersinn, eine Verschiebung des Kurvenkörpers nach rechts erfolgt.

Aus den Fig.1-4 geht ebenfalls unmittelbar hervor, dass in dem Falle, dass der Kurvenkörper 7 fest eingespannt und die Welle 2 beweglich angeordnet sind, die Welle 2 sich bei Drehung im Uhrzeigersinn nach rechts entlang des Kurvenkörpers 7 bewegt. Wird also die Welle 2 in einem Führungsschlitten (Abtriebselement) gelagert, der durch Randbereiche des Kurvenkörpers 7 geführt wird, so erfolgt bei Drehung der Welle 2 eine axiale Verschiebung dieses Führungsschlittens. Dabei kann der Führungsschlitten beispielsweise Träger eines Antriebsmotors für die Welle 2 sein, so dass das Kurvengetriebe 1 beispielsweise als Laufkatze verwendbar ist.

Um eine möglichst gleichmäßige Verschiebung des Schiebers (Kurvenkörpers) sowie eine gleichmäßige Kraftübertragung von der Welle auf den Kurvenkörper zu erreichen, hat es sich als zweckmäßig erwiesen, wenn das Eingriffsglied mehr als zwei Antriebsstößel umfasst, die in eine entsprechende Anzahl von Führungsnuten eingreifen. Dabei können die Antriebsstößel vorzugsweise gleichmäßig über den Umfang des Trägerteiles verteilt angeordnet sein.

Allerdings ist bei einem derartigen Ausführungsbeispiel zu beachten, dass aufgrund der Tatsache, dass gleichzeitig mehrere benachbarte Antriebsstößel in ihnen zugeordneten Führungsnuten des Kurvenkörpers eingreifen und der horizontale Abstand der Antriebsstößel sich bei Drehung der Welle ändert, die Führungsnuten nicht mehr einen vertikalen Verlauf, sondern eine gebogene Kurvenkontur aufweisen müssen.

Die Erfindung schlägt daher vor, dass insbesondere bei der Verwendung von mehr als zwei Antriebsstößel diese relativ zu dem Kurvenkörper bei dessen axialer Verschiebung nicht mehr einen quasi rechteckförmigen Verlauf (mit kreisabschnittförmigem Verbindungsbereich), sondern einen schlaufenförmigen Verlauf durchlaufen, welcher die Kontur der Führungsnuten bestimmt.

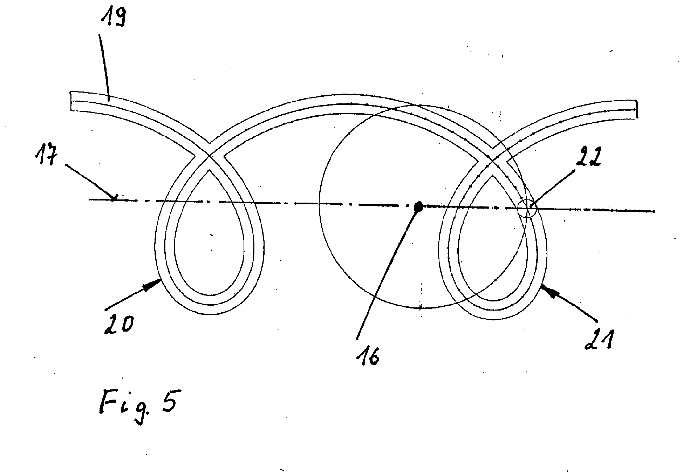

Fig.5 zeigt den Abschnitt einer derartigen Führungsnut 19 eines Kurvenkörpers mit zwei Schlaufen 20, 21 sowie einen in die Führungsnut 19 eingreifenden Antriebsstößel 22. Dabei wird nur in dem Bereich der jeweiligen Schlaufe 20, 21 unterhalb der mit 17 bezeichneten Mittellinie eine Schubbewegung des entsprechenden Kurvenkörpers durch den Antriebsstößel 22 bewirkt, so dass der Bereich oberhalb der Mittellinie 17 beispielsweise durch einen als Verbindungsbereich dienenden vertieften Randbereich des Kurvenkörpers ersetzt werden kann.

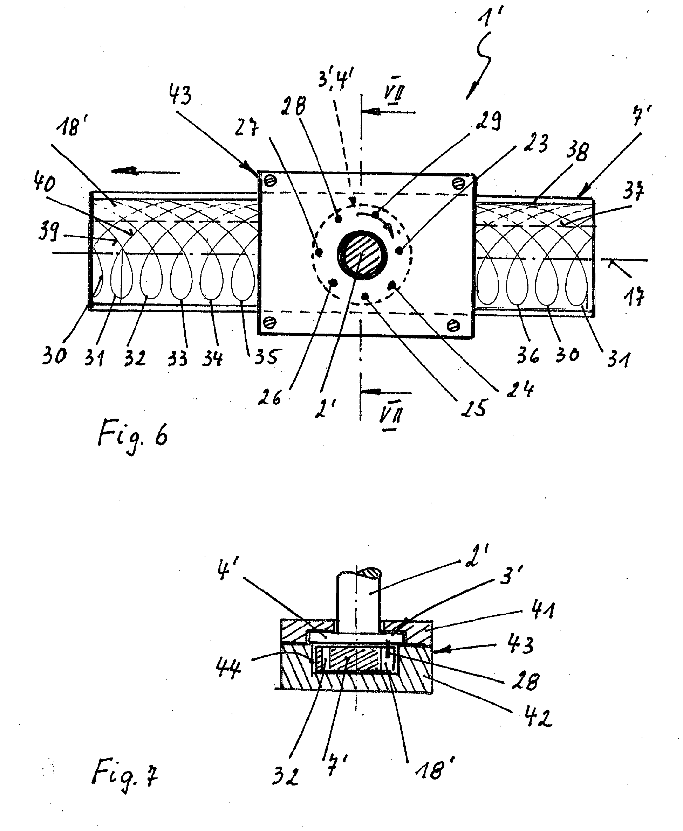

Fig.6 und 7 zeigen ein praktisches Ausführungsbeispiel eines erfindungsgemäßen Kurvengetriebes 1', bei dem ein wiederum an einer Welle 2' befestigtes Eingriffsglied 3' sieben gleichmäßig über den Umfang eines aus Metall bestehenden Trägerteiles 4' verteilt angeordnete Antriebsstößel 23-29 umfasst. Diese Antriebsstößel 23-29 greifen in entsprechende Führungsnuten 30-36 eines aus Kunststoff bestehenden, axial verschiebbaren Kurvenkörpers (Schiebers) 7' ein, wobei in Fig.6 lediglich die Mittellinien der Führungsnuten 30-36 dargestellt sind.

Der Verbindungsbereich 18' in dem Kurvenkörper 7' beginnt bei diesem Ausführungsbeispiel nicht direkt oberhalb der Mittellinie 17 (welche der mittleren Längsachse des Kurvenkörpers 7' entspricht), wie im Falle des in den Fig.1-4 dargestellten Ausführungsbeispieles, sondern oberhalb einer gestrichelt dargestellten Linie 37, die zwischen der Mittellinie 17 und dem oberen Rand 38 des Kurvenkörpers 7'verläuft. Dadurch wird erreicht, dass die durch die Schlaufen der Führungsnuten 30-36 gebildeten Kurvenkonturen, welche die Schubbewegung des Kurvenkörpers 7' in die vorgegebene Richtung bewirken, einen die Betriebssicherheit des Kurvengetriebes 1' verbessernden Einlaufbereich 39 und Auslaufbereich 40 in bzw. aus dem durch einen vertieften Randbereich gebildeten Verbindungsbereich 18' aufweisen. Der jeweilige Antriebsstößel 23-29 kann daher aus der ihm zugeordneten Führungsnut 30-36 austreten, wenn die von ihm veranlasste Schubbewegung aufgrund der Kurvenkontur der Führungsnut 30-36 beendet ist bzw. in eine ihm zugeordnete folgende Führungsnut 30-36 eintreten, wenn die Kurvenkontur dieser Führungsnut 30-36 eine weitere Schubbewegung ermöglicht.

Die Welle 2' und das Eingriffsglied 3' sind in einem aus Deckelteil 41 und Basisteil 42 bestehenden Gehäuse 43 gelagert. Dabei ist das scheibenförmige Eingriffsglied 3' einstückig mit der Welle 2' verbunden, wobei das Trägerteil 4' des Eingriffsgliedes 3' randseitig in dem Deckelteil des Gehäuses drehbar gelagert ist. Die ringförmig an dem Trägerteil 4' angeordneten Antriebsstößel 23-29 erstrecken sich in Richtung auf das Basisteil 42.

In dem Basisteil 42 ist eine nutenförmige Ausnehmung 44 vorgesehen, in welcher der Kurvenkörper 7' axial verschiebbar gelagert ist. Dabei sind die Führungsnuten 30-36 des Kurvenkörpers 7' oberseitig angeordnet, derart, dass die Antriebsstößel 23-29 in die Führungsnuten 30-36 eingreifen können.

In dem in den Fig.6 und 7 dargestellten Ausführungsbeispiel bewirkt eine Drehung der Welle 2' im Uhrzeigersinn wiederum eine Verschiebung des Kurvenkörpers 7' nach links.

Selbstverständlich kann auch bei diesem Ausführungsbeispiel vorgesehen werden, dass der Kurvenkörper 7' fest und das als Führungsschlitten ausgebildete Gehäuse 43 entlang des Kurvenkörpers 7' verschiebbar angeordnet sind. In diesem Fall würde eine Drehung der Welle 2' im Uhrzeigersinn eine Verschiebung des Gehäuses 43 mit Welle 2' und Eingriffsglied 3'' nach rechts bewirken.

Die Erfindung ist selbstverständlich nicht auf das vorstehend beschriebene Ausführungsbeispiel beschränkt. So kann auch bei dem in den Fig.6 und 7 dargestellten Ausführungsbeispiel vorgesehen sein, dass die Welle 2' mit zwei voneinander beabstandeten, axial parallel zueinander angeordneten Eingriffselementen versehen ist, deren Antriebsstößel jeweils in die Führungsnuten zweier getrennter Kurvenkörper eingreifen, wobei der Kurvenverlauf der Führungsnuten der beiden Kurvenkörper derart gewählt ist, dass bei Drehung der Welle eine gegenläufige Verschiebung der Abtriebselemente erfolgt.

Es kann aber auch vorgesehen werden, dass das erfindungsgemäße Kurvengetriebe lediglich eine relativ kurze axiale Verschiebung eines Kurvenkörpers (Schiebers) bewirkt und daher auf sich wiederholende Führungsnuten verzichtet werden kann.

Bei den Antriebsstößeln muss es sich selbstverständlich nicht zwingend um starre, zapfenförmige Stößel handeln, sondern es können beispielsweise auch Nutrollen oder auch Schiffchen verwendet werden, welche ständig gleitend an beiden Nutflanken der Führungsnuten anliegen.

Sofern die Eingriffsglieder mehrere Antriebsstößel aufweisen, müssen diese nicht zwingend auf dem gleichen Teilkreis regelmäßig oder unregelmäßig angeordnet sein, sondern können sich (je nach gewünschtem Bewegungsablauf des Kurvengetriebes) auch auf verschiedenen Teilkreisen befinden.

Durch entsprechende Ausbildung der Eingriffsglieder und der Führungsnuten kann man das Kurvengetriebe selbsthemmend oder freilaufend ausgestalten. So bewirkt beispielsweise die Verwendung längerer Antriebsstößel eine Selbsthemmung des Getriebes während sehr kurze Antriebsstößel mit auf dem Nutengrund der Führungsnuten gleitenden Unterseiten einen freilaufenden Aufbau des Getriebes erlauben.

Außerdem können die Antriebsstößel auch derart ausgebildet sein, dass sie freiliegend zwischen dem Trägerteil des Eingriffselementes und den Führungsnuten anordbar sind. Dieses ist beispielsweise möglich, wenn es sich um kugelförmig ausgebildete Antriebsstößel handelt.

Schließlich kann auch vorgesehen werden, dass das jeweilige Eingriffsglied nur einen einzigen Antriebsstößel umfasst. In diesem Fall ergibt sich bei Drehung der Welle lediglich so lange eine Verschiebung des Abtriebselementes bis der Antriebsstößel das Ende des eine Schubbewegung bewirkenden Führungsbandabschnittes erreicht hat, während er anschließend, d.h. in dem Verbindungsbereich der Führungsnut, seine eingenommene Position beibehält bis der Antriebsstößel wieder in den ihm zugeordneten nachfolgenden Führungsnutabschnitt eintritt usw.

Weist bei der Verwendung nur eines einzigen Antriebsstößels der Kurvenkörper nur eine einzige Führungsnut auf, die sich von der durch die Drehachse 16 bestimmten Mittellinie beidseits zum Rand des Kurvenkörpers erstreckt, so erfolgt bei Drehung des Antriebsstößels um 360° zunächst eine Schiebbewegung des Kurvenkörpers in eine erste axiale Richtung und anschließend eine Rückwärtsbewegung in die entgegengesetzte Richtung.

Da allerdings bei Verwendung einer vertikalen Führungsnut, die Geschwindigkeit des Kurvenkörpers bei gleichmäßiger Umdrehung der Antriebsstößels stark schwankt, kann es zum Erreichen einer gleichmäßigen Schiebebewegung des Kurvenkörpers vorteilhafter sein, die Führungsnut als Doppelschleife auszubilden.

## Patentansprüche

1. Kurvengetriebe zur Übertragung der Drehbewegung einer Welle (2') in eine Linearbewegung eines geführten Abtriebselementes (7'; 43), wobei das Kurvengetriebe (1') einen mindestens eine Führungsnut (19; 30-36) enthaltenden Kurvenkörper (7') und ein Eingriffsglied (3') mit mindestens einem in die Führungsnut (19; 30-36) eingreifenden Stößel (22; 23-29) umfasst, mit den Merkmalen:
a) das Eingriffsglied (3') ist mit der Welle (2') verbunden, derart, dass sich bei Drehung der Welle (2') der Stößel (22; 23-29) als Antriebsstößel in einem vorgegebenen Abstand kreisförmig um die Drehachse (16) der Welle (2') bewegt;
b) das geführte Abtriebselement (7'; 43) ist entweder als Schieber ausgebildet und der Kurvenkörper (7') ist Teil des Schiebers, oder das geführte Abtriebselement (7'; 43) ist als auf einer Führungsschiene angeordneter Führungsschlitten (43) ausgebildet, wobei in letzterem Fall die Welle (2') mit dem Eingriffsglied (3') drehbar in dem Führungsschlitten (43) gelagert ist und der Kurvenkörper (7') Teil der Führungsschiene ist;
c) die Führungsnut (9-14; 19; 30-36) weist einen schlaufenförmigen Verlauf auf.

2. Kurvengetriebe nach Anspruch 1, **dadurch gekennzeichnet, dass** das Eingriffsglied (3') mehrere kreisförmig um die Welle (2') herum angeordnete Antriebsstößel (23-29) umfasst, die in eine entsprechende Anzahl von Führungsnuten (30-36) des Kurvenkörpers (7') eingreifen.

3. Kurvengetriebe nach Anspruch 1, **dadurch gekennzeichnet, dass** das Eingriffsglied (3') mehrere Antriebsstößel (23-29) umfasst, die in eine entsprechende Anzahl von Führungsnuten (30-36) des Kurvenkörpers (7') eingreifen, wobei mindestens ein Teil der Antriebsstößel (23-29) auf unterschiedlichen Kreisen um die Welle (2') herum angeordnet sind.

4. Kurvengetriebe nach einem der Ansprüche 2 oder 3, **dadurch gekennzeichnet, dass** die jeweilige Führungsnut (30-36), in Bewegungsrichtung des Abtriebselementes (7'; 43) gesehen, mehrere aufeinander folgende schlaufenförmige Führungsnutabschnitte aufweist, wobei zwischen einzelnen, die Schubbewegung bewirkenden Führungsnutabschnitten Verbindungsbereiche (18') vorgesehen sind, innerhalb welcher der jeweilige Antriebsstößel (23-29) die durch einen nachfolgenden Antriebsstößel (23-29) bewirkte Schubbewegung des Abtriebselementes (7'; 43) nicht behindert.

5. Kurvengetriebe nach einem der Ansprüche 1 bis 4, **dadurch gekennzeichnet, dass** das Eingriffsglied (3') ein scheiben- oder zylinderförmiges Trägerteil (4') umfasst, das auf einem die Drehachse (16) der Welle (2') einschließenden Kreis eine Vielzahl gleichmäßig beabstandeter Bohrungen aufweist, in welche die Antriebsstößel (23-29) einsetzbar sind.

6. Kurvengetriebe nach einem der Ansprüche 1 bis 5, **dadurch gekennzeichnet, dass** durch entsprechende Ausbildung des Eingriffsgliedes (3') und der Führungsnut (30-36) das Kurvengetriebe (1') selbsthemmend oder freilaufend ausgebildet ist.

7. Kurvengetriebe nach einem der Ansprüche 1 bis 6, **dadurch gekennzeichnet, dass** die Welle (2') mit zwei voneinander beabstandeten, axial parallel zueinander angeordneten Eingriffsgliedern versehen ist, deren zapfenförmige Stößel jeweils in die Führungsnuten zweier getrennter Kurvenkörper eingreifen, welche jeweils mit einem als Schieber ausgebildeten Abtriebselement verbunden sind, wobei der Kurvenverlauf der Führungsnuten der beiden Kurvenkörper derart gewählt ist, dass bei Drehung der Welle eine gegenläufige Verschiebung der Abtriebselemente erfolgt.

## Claims

1. Cam mechanism for converting the rotary movement of a shaft (2') into a linear movement of a guided output element (7'; 43), the cam mechanism (1') comprising a cam body (7') containing at least one guide groove (19; 30-36) and an engagement member (3') with at least one tappet (22; 23-29) engaging in the guide groove (19; 30-36), having the features
a) the engagement member (3') is connected to the shaft (2') in such a manner that, upon rotation of the shaft (2'), the tappet (22; 23-29) as a drive tappet moves circularly about the axis of rotation (16) of the shaft (2') at a predetermined distance;
b) either the guided output element (7'; 43) is designed as a slide and the cam body (7') is part of the slide, or the guided output element (7'; 43) is designed as a guide carriage (43) arranged on a guide rail, wherein in the latter case the shaft (2') with the engagement member (3') is rotatably mounted in the guide carriage (43) and the cam body (7') is part of the guide rail;
c) the guide groove (9-14; 19; 30-36) has a loop-shaped course.

2. Cam mechanism according to claim 1, **characterised in that** the engagement member (3') comprises a plurality of drive tappets (23-29) arranged circularly around the shaft (2') and engaging in a corresponding number of guide grooves (30-36) of the cam body (7').

3. A cam mechanism according to claim 1, **characterized in that** the engagement member (3') comprises a plurality of drive tappets (23-29) engaging a corresponding number of guide grooves (30-36) of the cam body (7'), at least part of the drive tappets (23-29) being arranged on different circles around the shaft (2').

4. Cam mechanism according to one of claims 2 or 3, **characterized in that** the respective guide groove (30-36), viewed in the direction of movement of the output element (7'; 43), has a plurality of successive loop-shaped guide groove sections, wherein connecting regions (18') are provided between individual guide groove sections which effect the thrust movement, within which connecting regions (18') the respective drive tappet (23-29) does not obstruct the thrust movement of the output element (7'; 43) effected by a following drive tappet (23-29).

5. Cam mechanism according to one of claims 1 to 4, **characterised in that** the engagement member (3') comprises a disc-shaped or cylindrical carrier part (4') which has a plurality of uniformly spaced bores on a circle enclosing the axis of rotation (16) of the shaft (2'), into which the drive tappets (23-29) can be inserted.

6. Cam mechanism according to one of claims 1 to 5, **characterised in that** the cam mechanism (1') is designed to be self-locking or free-running by means of a corresponding design of the engagement member (3') and the guide groove (30-36).

7. Cam mechanism according to one of claims 1 to 6, **characterised in that** the shaft (2') is provided with two engagement members spaced apart from one another and arranged axially parallel to one another, the pin-shaped tappets of which engage in each case in the guide grooves of two separate cam bodies, which are each connected to an output element designed as a slider, wherein the curve characteristics of the guide grooves of the two cam bodies being selected so that when the shaft rotates, a displacement of the output elements in opposite directions occurs.

## Revendications

1. Mécanisme à came pour convertir le mouvement rotatif d'un arbre (2') en un mouvement linéaire d'un élément de sortie guidé (7' ; 43), le mécanisme à came (1') comprenant un corps de came (7') contenant au moins une rainure de guidage (19 ; 30-36) et un élément d'engagement (3') avec au moins un poussoir (22 ; 23-29) s'engageant dans la rainure de guidage (19 ; 30-36), ayant les caractéristiques suivantes
a) l'élément d'engagement (3') est relié à l'arbre (2') de telle manière que, lors de la rotation de l'arbre (2'), le poussoir (22 ; 23-29), en tant que poussoir d'entraînement, se déplace circulairement autour de l'axe de rotation (16) de l'arbre (2') à une distance prédéterminée ;
b) l'élément de sortie guidé (7' ; 43) est soit conçu comme un coulisseau et le corps de came (7') fait partie du coulisseau, soit l'élément de sortie guidé (7' ; 43) est conçu comme un chariot de guidage (43) disposé sur un rail de guidage, auquel cas l'arbre (2') avec l'élément d'engagement (3') est monté à rotation dans le chariot de guidage (43) et le corps de came (7') fait partie du rail de guidage ;
c) la rainure de guidage (9-14 ; 19 ; 30-36) a un parcours en forme de boucle.

2. Mécanisme à came selon la revendication 1, **caractérisé en ce que** l'élément d'engagement (3') comprend une pluralité de poussoirs d'entraînement (23-29) disposés circulairement autour de l'arbre (2') et s'engageant dans un nombre correspondant de rainures de guidage (30-36) du corps de came (7').

3. Mécanisme à came selon la revendication 1, **caractérisé en ce que** l'élément d'engagement (3') comprend une pluralité de poussoirs d'entraînement (23-29) s'engageant dans un nombre correspondant de rainures de guidage (30-36) du corps de came (7'), au moins une partie des poussoirs d'entraînement (23-29) étant disposée sur différents cercles autour de l'arbre (2').

4. Mécanisme à came selon l'une des revendications 2 ou 3, **caractérisé en ce que** la rainure de guidage (30-36) respective, vue dans la direction de déplacement de l'élément de sortie (7' ; 43), présente plusieurs sections de rainure de guidage successives en forme de boucle, des zones de liaison (18') étant prévues entre les sections de rainure de guidage individuelles, qui provoquent le mouvement de poussée, pendant que le poussoir d'entraînement respectif (23-29) à l'intérieur de ces zones de liaison (18') ne fait pas obstacle au mouvement de poussée de l'élément de sortie (7' ; 43) provoqué par un poussoir d'entraînement suivant (23-29).

5. Mécanisme à came selon l'une des revendications 1 à 4, **caractérisé en ce que** l'élément d'engagement (3') comprend une partie de support (4') en forme de disque ou de cylindre qui présente plusieurs alésages uniformément espacés sur un cercle entourant l'axe de rotation (16) de l'arbre (2'), dans lesquels les poussoirs d'entraînement (23-29) peuvent être insérés.

6. Mécanisme à came selon l'une des revendications 1 à 5, **caractérisé en ce que** le mécanisme à came (1') est conçu pour être autobloquant ou à fonctionnement libre au moyen d'une conception correspondante de l'élément d'engagement (3') et de la rainure de guidage (30-36).

7. Engrenage à cames selon l'une des revendications 1 à 6, **caractérisé en ce que** l'arbre (2') est pourvu de deux éléments d'engagement espacés l'un de l'autre et disposés parallèlement à l'axe, dont les poussoirs en forme de goupille s'engagent chacun dans les rainures de guidage de deux corps de came séparés, qui sont reliés chacun à un élément de sortie conçu comme un coulisseau, la courbe des rainures de guidage des deux corps de came étant choisie de telle sorte que, lorsque l'arbre tourne, il se produit un déplacement opposé des éléments de sortie.
